Europäisches Patentamt

European Patent Office

Office européen des brevets

(19)

(11) Publication number: **0 409 407 A2**

# EUROPEAN PATENT APPLICATION

(21) Application number: 90306629.8

(51) Int. Cl.⁵: **G21C 7/103**

(22) Date of filing: **18.06.90**

The title of the invention has been amended (Guidelines for Examination in the EPO, A-III, 7.3).

(30) Priority: **19.06.89 US 367805**

(43) Date of publication of application:
**23.01.91 Bulletin 91/04**

(84) Designated Contracting States:
**CH DE ES IT LI SE**

(71) Applicant: **GENERAL ELECTRIC COMPANY**
**1 River Road**
**Schenectady, NY 12345(US)**

(72) Inventor: **Van Diemen, Paul**
**1438 Calle Alegre**
**San Jose, California 95120(US)**
Inventor: **Brayman, Kenneth Wood**
**1490 Richards Avenue**
**San Jose, California 95125(US)**

(74) Representative: **Smith, Thomas Ian Macdonald**
**et al**
**London Patent Operation G.E. Technical**
**Services Co. Inc. Burdett House 15-16**
**Buckingham Street**
**London WC2N 6DU(GB)**

(54) **Control rod absorber configuration.**

(57) A control rod construction especially for a boiling water nuclear reactor is disclosed in which at least some individual control rod elements include neutron absorbing poison, typically boron carbide (30), with hafnium cladding (32). In prior art construction, the entirety of the control elements have claddings of stainless steel; in the construction disclosed herein hafnium-clad, boron-carbide-containing control rods are used, preferably selectively interleaved with conventional stainless steel clad rod elements (33). The interleaving of the hafnium clad boron carbide with the stainless steel clad boron carbide maintains an operational balance between the desired worth of the control rod on one hand and the total weight of the control rod unit on the other hand. The combination of the hafnium and boron carbide, both of which constitute neutron absorbers, is complementary. The boron carbide and hafnium each have neutron absorbing capabilities independent of one another. The result is that the neutron absorption of the hafnium clad boron carbide exceeds the neutron absorption of either the boron carbide alone or the hafnium alone.

FIG._2B.

EP 0 409 407 A2

# HIGH WORTH LONG LIFE CONTROL ROD ABSORBER CONFIGURATION

This invention relates to control rods such as used in nuclear reactors.

Control rods, particularly for boiling water nuclear reactors, are well known. Typical boiling water nuclear reactors contain groups of square sectioned fuel bundles placed in side-by-side arrays within the core of the nuclear reactor. A group of four such square sectioned bundles are placed in side-by-side relation on a common support so that the sides of the square sectioned control rod bundles are spaced apart one from another. These spaced apart sides define cruciform sectioned control rod receiving interstices between the fuel bundles. The cruciformed shaped interstices permit the entry and exit of complementary cruciform shaped control rods.

Conventional control rods for the insertion to and withdrawal from an interstitial position between the fuel bundles have the complementary cruciform cross section. These conventional control rods have four planar sides. Each planar side fits between two square sectioned fuel bundles. Typically, the planar sides of these cruciform cross sections contain many individual tubular cladding members. These tubular cladding members have in the prior art been fabricated from stainless steal.

The tubular cladding members act as high temperature pressure vessels and contain neutron absorbing poisons, typically boron carbide. Both ends of the tubular cladding are sealed--preferably with natural boron carbide. During the in-service life of the control rod, the boron carbide absorbs neutrons and undergoes atomic decomposition.

This atomic decomposition produces gases under high pressure. These gases must remain sealed within the control rod elements.

Conventional control rod members include a lower support member for supporting the individual control rod elements. An upper support member holds the individual elements vertically upright. A tie member extending from the lower support member to the upper support member maintains the control rod unit as a unitary member. Preferably groups of control rod elements forming a planar neutron absorbing surface are surrounded by a metallic sheath.

Hafnium has been known as a good neutron absorber. Hafnium has heretofore been used in the control of the nuclear reaction of boiling water nuclear reactor. It is known to place hafnium tips at the end of control rods or along the side edges of control rods. Typically, the hafnium is included in the control rods in the form of plates. Alternately, solid cylindrical bars of hafnium have been used interior of and at the ends of conventional stainless steel control rod element. See, for example, Cearley et al . U.S. Patent 4,676,948, issued June 31, 1987 entitled Nuclear Reactor Control Rod.

A control rod construction is disclosed herein in which individual control rod elements have hafnium cladding. In the disclosed construction tubular cladding in discrete rods contain neutron absorbing boron carbide. In turn, the discrete tubular cladding with the boron carbide sealed therein is contained in a cruciform sectioned elongate control rod. A cruciform shaped lower support member and a cruciform shaped upper support member are held together by a central tie member to maintain the rods in side-by-side planar arrays. In prior art construction, the entirety of the contained claddings have been constructed from stainless steel; in the disclosure herein, hafnium clad boron carbide containing control rods are used, preferably selectively interleaved with conventional stainless steel clad rod elements. The interleaving of the hafnium clad boron carbide with the stainless steel clad boron carbide maintains an operational balance between the desired worth of the control rod on one hand and the total weight of the control rod unit on the other hand. The combination of the hafnium and boron carbide, both of which constitute neutron absorbers, is complementary. The boron carbide and hafnium have neutron absorbing capabilities independent of one another. The result is that the neutron absorption of the hafnium clad boron carbide exceeds the neutron absorption of either the boron carbide alone or the hafnium alone.

The disclosed control rod construction is of adjustagle improved worth. The stainless steel cladding utilized in conventional control rod construction is not used. Hafnium cladding is used in its place.

An advantage of the use of hafnium cladding for the boron carbide is that control rods of greater worth result.

Substituting the hafnium cladding for the stainless steel cladding provides a control rod element in which both the contained absorber and the cladding itself can be expended in the neutron flux environment.

Hafnium has approximately the same overall strength as the stainless steel. Consequently, a thin wall cladding (18-22 mils (0.46-0.56 mm) in wall thickness) of hafnium tubing filled with boron carbide provides a control rod element. The resulting worth achieved by such a control rod element cannot otherwise occur without the use of more expensive enriched boron. An advantage is that the hafnium has mechanical properties which can accommodate the helium pressure buildup resulting from the neutron interaction with boron.

Also the use of enriched boron results in more boron-10 atoms in a fixed volume. Depleting the boron-10 to the same fractional depletion will result in significantly higher helium gas pressurization due to the smaller $B^{10}$ atom/volume ratio. Hafnium undergoes $(n,\gamma)$ nuclear interactions and therefore does not generate gases. Therefore, the use of hafnium in place of enriched boron reduces gas pressure which can be life limiting from structural considerations.

A further advantage is that the number of hafnium tubes can be changed to tailor the particular control rod to the desired worth.

Yet an additional advantage is that the use of the thin wall hafnium tube minimizes the absorber rod weight increase. This absorber rod weight increase can be compensated for by minor changes in the control rods' support structure.

A further advantage is that the hafnium is less reactive in the interior of a boiling water reactor coolant environment. It is therefore not as susceptible to irradiation assisted stress corrosion cracking or yielding to the results of boron carbide swelling under irradiation.

Other objectives, features and advantages will become more apparent from the following description and accompanying drawings in which:

Fig. 1 is a perspective view of a single control rod, the control rod being shown separate and apart from its placement within an array of fuel bundles;

Fig. 2A is a section taken along lines A-A of Fig. 1 illustrating the placement of hafnium cladding in all the control rod elements;

Fig. 2B is an alternative section along lines A-A of Fig. 1 illustrating hafnium placed in alternating control rod elements; and

Fig. 2C is a detail illustrating the sealing of the end of a hafnium rod with a welded end plug for sealing of the boron carbide within the hafnium cladding.

Fig. 3 is log-log plot of neutron absorbing cross section versus neutron energy illustrating the absorption of the isotopes boron $^{10}B$ and natural hafnium $_{72}Hf$.

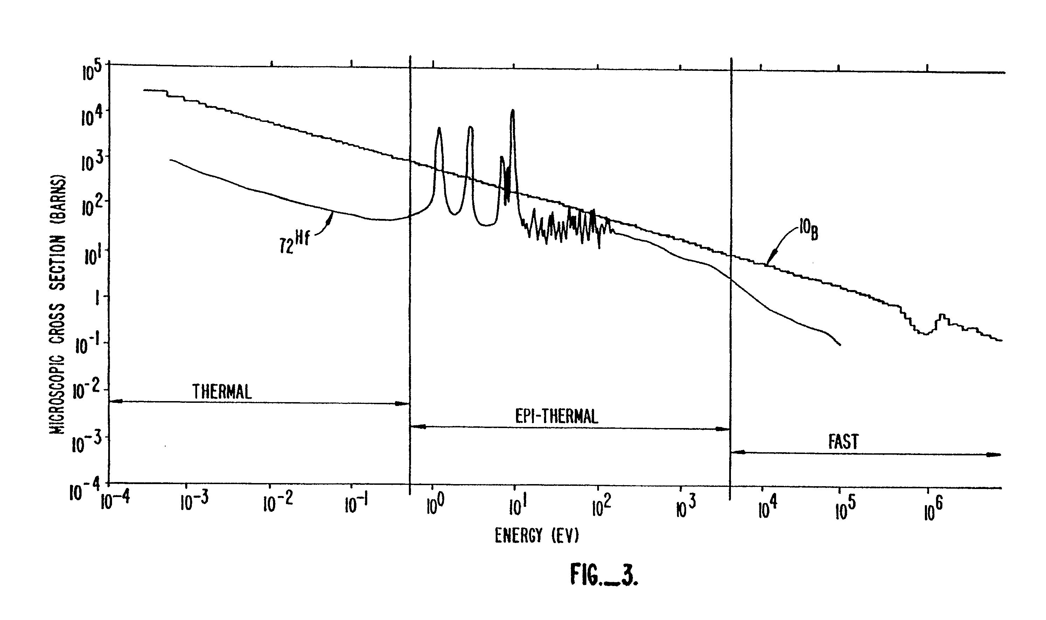

It can be seen from the plot of Fig. 3 that $_{72}Hf$ constitutes a so-called resonance absorber. That is to say at certain epi-thermal neutron energies, the hafnium preferentially captures neutrons. These zones of preferential capture plot substantially above the linear log-log absorption of boron.

It is to be understood that the combination of the hafnium cladding to the boron carbide produces a result which neither, alone, achieve. Specifically, prior art control rod design containing stainless steel cladding filled with 70% boron carbide can be rated with a relative worth of 1.0. A pure hafnium rod would have a worth of 0.98. A rod with hafnium cladding around boron carbide has a worth of 1.12.

Further, the hafnium is not self-shielding to the boron carbide. As can be seen from the enclosed plot each has preferential thermal energies of the neutron captured.

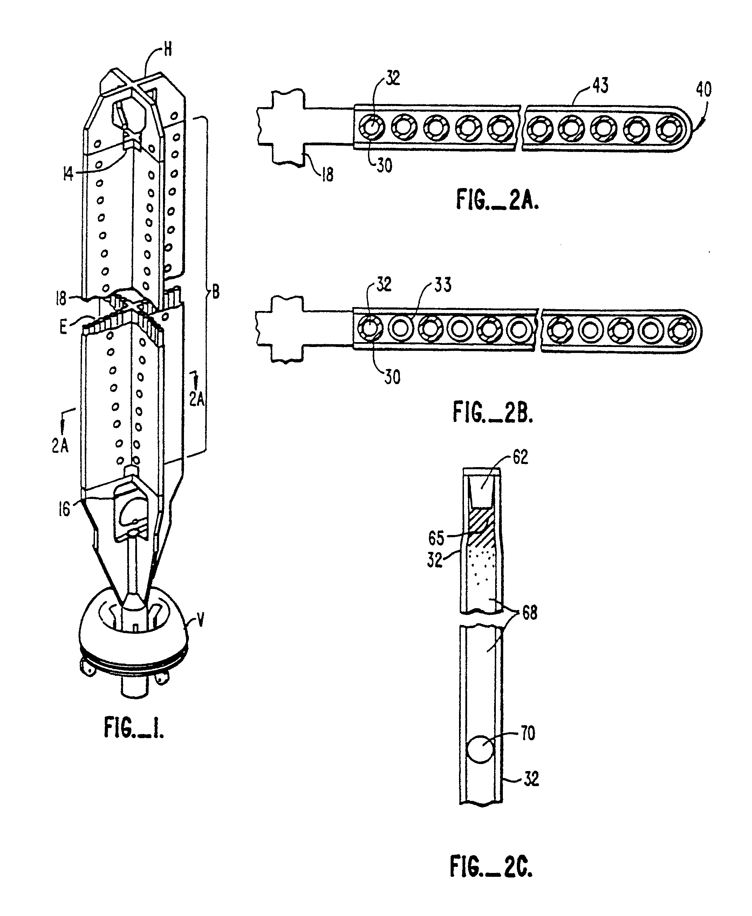

Understanding that the combination of hafnium with boron carbide exceeds the whole of either alone, sample constructions of each of the planar surfaces of Fig. 1 can be seen in respective Figs. 2A and 2B.

Referring to Fig. 2A hafnium tubes containing boron carbide extend exclusively along a planar surface of the control rod. The hafnium 30 and the boron carbide at 32 extend from the central tie member 18 to the edge of the control rod at 40. A sheath 43 surrounds and protects the hafnium rods in a conventional construction.

It will be understood that the construction of Fig. 2A realizes the maximum worth of a control rod construction in accordance with this invention.

Referring to Fig. 2B an alternative and more useful construction is set forth. Hafnium has approximately the density of lead. Conventional reactors with conventional control rod drives are limited in the amount of weight that can be practically moved. It is required that control rods during emergency procedures (such as SCRAM) be inserted rapidly. If an all hafnium construction like Fig. 2A is used in each of the planar portions of a control rod, there will result an unacceptably heavy control rod. Accordingly, we prefer to alternate hafnium control rods with conventional stainless steel rods.

Referring to Fig. 2B, boron carbide 30 is contained within a hafnium tube 32 in a first control rod element, and within a stainless steel tube 33 in a second control rod element. This construction alternates across the control rod planar surfaces.

Referring to Fig. 2C, a section of a typical hafnium rod is shown. Hafnium tube 32 has a hafnium plug 62 welded to the tube. Immediately adjacent the plug 62 is a filler material 65 to prevent the $B_4C$ poison absorber 68 from effecting the weld quality. Typically, the $B_4C$ is contained in tube 30 or 33 separated by spacer balls 70. Remaining construction of the hafnium rods is conventional.

It will be understood by those skilled in the nuclear arts, that it is common to tailor the worth of control rods for their location and use within a nuclear reactor. It will be understood that this invention by permitting the placement of hafnium tubes enable such tailoring easily to occur.

Referring to Fig. 1 a conventional control rod is disclosed. The control rod includes an upper handle end H, a lower velocity end V, and a control rod blade section B therebetween.

Explanation of the construction of the control rod sufficient for understanding this invention includes an upper support member 14 and a lower support member 16. Members 14 and 16 can be seen to be of cruciform section. Moreover, the cruciform section of upper member 14 is complementary to the cruciform section of lower member 16.

Members 14 and 16 tie together by a tie rod member 18. Tie rod member 18 is shown here having a cruciform configuration extending centrally along the control rod.

The control rods have active neutron absorbing elements E. It is these elements E which are the subject of this invention.

In the prior art elements E have included stainless steel cladding tubes. Stainless steel cladding tubes have contained therein boron carbide ($B_4C$).

High worth control rods have been achieved using enriched baron carbide. Unfortunately, enriched boron carbide is expensive. It is a purpose of the disclosed invention to compromise the expense of obtaining enriched boron carbide by the use of the hafnium cladding.

## Claims

1. A control rod construction having the combination of:
a plurality of tubular metallic cladding elements enclosing a neutron absorbing poison, said tubular cladding elements being in upstanding side-by-side relation to form planar surfaces for the absorption of neutrons;
a bottom support member for supporting the bottom of a row of said side-by-side tubular cladding elements;
a top support member for supporting the top of said side-by-side tubular cladding elements; and
a tie member for tying said top and bottom members together to enable said tubular cladding elements to be maintained as a unitary control rod array;
characterized in that at least one of said tubular cladding elements is formed of hafnium.
2. The invention of claim 1, wherein all said tubular cladding elements are formed of hafnium.
3. The invention of claim 1, wherein said tubular cladding elements contain boron carbide.
4. The invention of claim 3 and wherein said tubular cladding elements include unenriched boron carbide.
5. The invention of claim 1, wherein said tubular cladding elements are surrounded by a sheath.
6. A control rod construction including:
a plurality of tubular cladding elements;
neutron absorbing poison placed within said elements, a bottom support member for said elements;
a top support member for said elements;
a tie member extending from said bottom element to said top element for tieing said support elements one to another; and
neutron absorbing poison sealed in the interior of said cladding elements;
characterized in that at least one of said tubular cladding elements is formed of hafnium.
7. The invention of claim 6 and wherein all said tubular cladding elements are formed of hafnium.
8. The invention of claim 6 and wherein some of said tubular cladding elements are formed of stainless steel and the remainder of said tubular cladding elements are formed of hafnium.

FIG._1.

FIG._2A.

FIG._2B.

FIG._2C.

FIG._3.